# EUROPÄISCHE PATENTANMELDUNG

(11) **EP 0 678 694 A1**
(43) Veröffentlichungstag der Anmeldung: **25.10.1995**
(21) Anmeldenummer: 95105549.0
(22) Anmeldetag: 12.04.1995
(51) Int. Cl.: F16K 31/06, H01F 7/18

(54) **Elektromagnetventil**

(30) Priorität: 20.04.1994 DE 9406560 U
(71) Anmelder: Herion-Werke KG, D-70736 Fellbach (DE)
(72) Erfinder: Pfund, Stefan, D-71364 Winnenden (DE); Just, Ekkehart, D-58097 Hagen (DE)
(74) Vertreter: Leyh, Hans, Dr.-Ing.

(57) **Zusammenfassung**

Die Neuerung betrifft ein Magnetventil mit einem Magnetanker, der mit einem Sitzventil verbunden und durch eine Feder in Schließrichtung des Sitzventiles beaufschlagt ist. Der Magnetanker ist mit zwei individuellen Magnetspulen ausgerüstet, die getrennt voneinander ansteuerbar sind. Beim Auftreten eines Fehlers in dem Magnetsystem oder im Steuerkreis ist eine Magnetspule ausreichend, um die Halteleistung für den Magnetanker aufzubringen.

## Beschreibung

Die Neuerung betrifft ein Magnetventil, insbesondere ein Vorsteuerventil für Sicherheitsventile, mit einem Magnetanker, der mit einem Sitzventil verbunden und durch eine Feder in Schließrichtung des Sitzventiles beaufschlagt ist.

Es sind Sicherheitsventile bekannt, bei denen durch geeignete Schaltungen erreicht wird, daS am Verbraucheranschluß nur dann Druck ansteht, wenn zwei Ventilspindeln sich in gleichen Schaltpositionen befinden. Bei einer Fehlschaltung ist der Verbraucheranschluß entlüftet, so daß sich am Verbraucher kein Druck aufbauen kann. Diese Sicherheitsventile sind durch Vorsteuerventile vorgesteuert. Fällt nun eine der Vorsteuerungen aus, so fällt das Gesamtventil ab und unterbricht den daran hängenden Gesamtprozeß, auch dann, wenn beispielsweise nur ein untergeordneter Fehler in der Ansteuerung auftritt.
Dies ist ein Nachteil der bekannten Vorsteuerungen.

Der Neuerung liegt daher die Aufgabe zugrunde, ein Pilotventil oder Vorsteuerventil, insbesondere für Sicherheitsventile so weiterzubilden, daß der vorgenannte Nachteil vermieden wird.

Neuerungsgemäß wird dies dadurch erreicht, daß dem Magnetanker zwei individuelle Magnetspulen zugeordnet sind, die getrennt voneinander ansteuerbar sind.

Vorteilhafterweise ist jede Magnetspule mit einem eigenen Steuerkreis ausgerüstet.
In Achsrichtung des Magnetankers sind die beiden Magnetspulen zweckmäßigerweise hintereinander angeordnet.

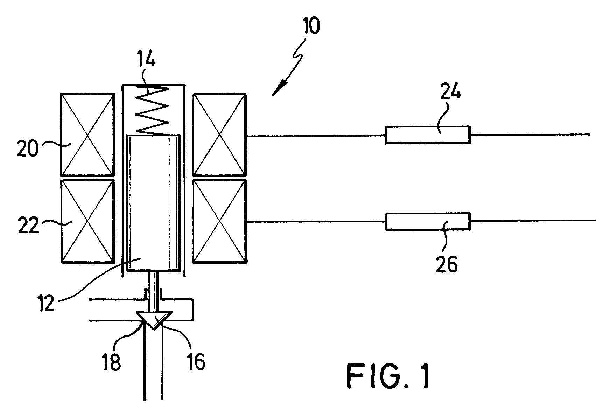

Eine beispielsweise Ausführungsform der Neuerung wird nachfolgend anhand der einzigen Figur der Zeichnung erläutert, die schematisch einen Teil eines Magnetventiles, insbesondere eines Vorsteuerventiles mit Magnetanker und Magnetspulen zeigt.

Das nur teilweise und nur schematisch dargestellte Magnetventil 10 hat einen Magnetanker 12, der mittels einer Druckfeder 14 ständig in Schließrichtung eines mit ihm verbundenen Sitzventiles 16 beaufschlagt ist. Das Sitzventil 16 schließt und öffnet einen Ventilsitz 18, der in einem nicht näher dargestellten Gehäuse des Magnetventiles 10 ausgebildet ist.
Um den Magnetanker 12 sind zwei separate Magnetspulen 20, 22 angeordnet, die den Magnetanker 12 umgeben und in Längsachse des Magnetankers 12 hintereinander liegen.
Die beiden Magnetspulen 20, 22 werden separat und unabhängig voneinander über Steuerkreise 24, 26 angesteuert, wobei der Steuerkreis 24 mit der Magnetspule 20 und der Steuerkreis 26 mit der Magnetspule 22 verbunden ist.

Die elektromagnetische Auslegung der beiden Magnetspulen 20, 22 ist so gewählt, daß zum Anzug des Magnetankers 12 (das heißt zum Öffnen des Ventiles 16, 18) beide Magnetspulen 20, 22 erregt werden, während die Halteposition des Vorsteuerventiles 10, in welcher das Ventil 16, 18 geöffnet ist, durch eine Magnetspule 20 oder 22 bewirkt wird.
Mit anderen Worten, zum Halten des Magnetankers 12 und des mit ihm verbundenen Sitzventiles 16 in offener Stellung ist nur eine Magnetspule 20 oder 22 erforderlich, während zum Anziehen des Magnetankers 12, das heißt zum Öffnen des Sitzventiles 16, 18 beide Magnetspulen 20, 22 erregt werden müssen.
Beim Auftreten eines Fehlers jeglicher Art in den Magnetsystemen oder in den Steuerkreisen ist somit eine Magnetspule 20 oder 22 ausreichend, um die Halteleistung für den Magnetanker 12 aufzubringen.
Ein aufgetretener Fehler kann durch eine beliebige geeignete Überwachungsschaltung festgestellt werden. Sollte ein an den Magnetspulen oder an den Steuerkreisen aufgetretener Fehler nicht ausgewertet werden, so wird er spätestens beim Wiedereinschalten des Vorsteuerventiles bemerkt, da dann der Magnetanker 12 wegen mangelnder Anzugsleistung nicht anspricht.

## Patentansprüche

1. Magnetventil, insbesondere Vorsteuerventil für Sicherheitsventile, mit einem Magnetanker, der mit einem Sitzventil verbunden und durch eine Feder in Schließrichtung des Sitzventils beaufschlagt ist, **dadurch gekennzeichnet**, daß dem Magnetanker (12) zwei individuelle Magnetspulen (20, 22) zugeordnet sind, die getrennt voneinander ansteuerbar sind.

2. Magnetventil nach Anspruch 1, **dadurch gekennzeichnet**, daS jede Magnetspule (20, 22) mit einem eigenen Steuerkreis (24, 26) ausgerüstet ist.

3. Magnetventil nach Anspruch 1 oder 2, **dadurch gekennzeichnet**, daß die beiden Magnetspulen (20, 22) in Achsrichtung des Magnetankers (12) hintereinander angeordnet sind.

4. Sicherheitsanordnung zum Betätigen eines Magnetventiles nach einem der Ansprüche 1 - 3, **dadurch gekennzeichnet**, daS die beiden Magnetspulen (20, 22) so ausgelegt sind, daß zum Öffnen des Magnetventiles (10) beide Magnetspulen (20, 22) erforderlich sind, während zum Halten des Magnetventiles (10) in geöffneter Position nur eine Magnetspule (20 oder 22) erforderlich ist.
